# EUROPÄISCHE PATENTSCHRIFT

(11) **EP 1 543 239 B1**
(45) Veröffentlichungstag und Bekanntmachung des Hinweises auf die Patenterteilung: **08.11.2006**
(21) Anmeldenummer: 03747990.4
(22) Anmeldetag: 09.09.2003
(51) Int. Cl.: F03B 3/12, F04D 29/22, F04D 29/24

(54) **LAUFRAD EINER HYDRAULISCHEN MASCHINE**
HYDRAULIC MACHINE ROTOR
ROUE MOBILE DE MACHINE HYDRAULIQUE

(30) Priorität: 26.09.2002 AT 14472002
(43) Veröffentlichungstag der Anmeldung: 22.06.2005
(73) Patentinhaber: VA TECH HYDRO GmbH, 1141 Wien (AT)
(72) Erfinder: KECK, Helmut, CH-8307 Effretikon (CH)
(74) Vertreter: Schweinzer, Friedrich
(86) Internationale Anmeldenummer: PCT/EP2003/009990
(87) Internationale Veröffentlichungsnummer: WO 2004/031573

(56) Entgegenhaltungen:
- DE-C- 19 803 390
- US-A- 5 570 998
- US-A- 6 135 716
- PATENT ABSTRACTS OF JAPAN vol. 2000, no. 05, 14. September 2000 (2000-09-14) -& JP 2000 054944 A (TOKYO ELECTRIC POWER CO INC:THE;MITSUBISHI HEAVY IND LTD), 22. Februar 2000 (2000-02-22)
- PATENT ABSTRACTS OF JAPAN vol. 001, no. 039 (M-015), 20. April 1977 (1977-04-20) -& JP 51 146649 A (KOBE STEEL LTD;OTHERS: 01), 16. Dezember 1976 (1976-12-16)

## Beschreibung

Die gegenständliche Anmeldung betrifft ein Laufrad einer hydraulischen Maschine, vorzugsweise eine Francis-Turbine, Francis-Pumpturbine oder Radial- bzw. Diagonalpumpe, mit einer Anzahl von Laufradschaufeln die zwischen einer inneren und äußeren Deckscheibe angeordnet sind, wobei die Laufradschaufeln eine Eintrittskante und eine Austrittskante aufweisen.

Ein Laufrad einer hydraulischen Maschine, wie z.B. eine Francis-Turbine, weist eine Mehrzahl von Laufradschaufeln auf, wobei jeweils zwei Schaufeln einen Strömungskanal für ein Betriebsmedium, z.B. Wasser, ausbilden, durch den das Betriebsmedium im Betrieb der hydraulischen Maschine fließt und so den Läufer in Rotation versetzt. Die Fertigung eines solchen Läufers ist aufgrund der komplexen geometrischen Formen der Laufradschaufeln sehr aufwendig. Um die Fertigung des Läufers, z.B. durch Schweißen, etc., und/oder eine entsprechende Bearbeitung der Oberflächen, z.B. durch Schleifen, Polieren, etc., mittels Bearbeitungsmaschinen, wie z.B. Robotern, etc., zu ermöglichen, dürfen die Laufradschaufeln nicht zu knapp aneinander liegen. Darüber hinaus besteht bei eng benachbarten Schaufelregionen immer die Gefahr, dass Schwemmgut im Laufrad stecken bleibt und somit den Betrieb beeinträchtigt, oder sogar die Abschaltung der hydraulischen Maschine notwendig macht.
Andererseits ist im Bereich der Austrittskante (=Eintrittskante bei einer Pumpturbine im Pumpbetrieb) der Laufradschaufeln ein kleiner Radius an der inneren Deckscheibe erwünscht, da dies für den Betrieb, vor allem in Betriebspunkten abseits des Auslegebetriebspunktes, von Vorteil ist. Bei kleinem Radius würde sich beispielsweise die Wirbelbildung am Austritt der Laufrades in Teillastbereichen wesentlich verbessern.
Am Laufradaustritt führt eine hohe Schaufelzahl zu sehr engen Platzverhältnissen. Eine kleine Schaufelzahl führt andererseits am Laufradeintritt zu weiten Abständen und einer hohen Belastung und Kavitation am Laufradeintritt.
Um diesen grundsätzlichen Widerspruch zu beseitigen, wurden Laufräder z.B. derart gefertigt, dass jede zweite oder dritte Schaufel im gesamten Austrittsbereich der Laufradschaufeln kürzer als die benachbarten Laufradschaufeln ausgeführt wurde, sogenannte "splitter blade runner"', und die Laufradschaufeln im Eintrittsbereich allesamt gleich belassen wurden. Der Vorteil dieser Ausführung ist der, dass damit im Austrittsbereich mehr Platz geschaffen wurde, womit die obigen Nachteile im Wesentlichen beseitigt waren. Allerdings erhöht sich dabei die Kavitationsgefahr im Bereich der äußeren Deckscheibe zwischen Schaufelmitte und Austrittskante, da sich dort aufgrund der teilweise reduzierten Schaufellängen die Schaufelbelastungen erhöhen.

Dokument US 5570998 zeigt ein Laufrad einer hydraulischen Maschine mit einer Anzahl von Laufradschaufeln, die zwischen einer inneren und äußeren Deckscheibe angeordnet sind, wobei die Laufradschaufeln eine Eintrittskante und eine Austrittskante aufweisen und wobei ein Kontaktpunkt zwischen der inneren Deckscheibe und Eintrittskante zumindest einer ersten Laufradschaufel einen bezüglich der Drehachse der hydraulischen Maschine größeren Radius aufweist als die entsprechenden Kontaktpunkte einer unmittelbar benachbarten zweiten Laufradschaufel.

Aus der US 6,135,716 wiederum ist ein Läufer einer Francis-Turbine bekannt, bei dem das Kavitationsverhalten verbessert wurde, indem die Eintritts- und die Austrittskanten der Laufradschaufeln bezüglich der Rotationsachse der Turbine besonders geformt werden. Die Längen aller Laufradschaufeln werden dabei gleich belassen, entsprechen somit einem herkömmlichen Laufrad. Damit ergeben sich jedoch wieder die oben angeführten Nachteile in Bezug auf die Fertigung und Betrieb abseits der Auslegung.

Eine Aufgabe der vorliegenden Anmeldung ist es daher, ein Laufrad einer hydraulischen Maschine anzugeben, bei dem die oben genannten Nachteile vermieden werden, das aber trotzdem ein gutes Kavitationsverhalten aufweist und keine Wirkungsgradeinbußen mit sich bringt.

Diese Aufgabe wird durch die gegenständliche Erfindung gelöst, indem ein Kontaktpunkt zwischen innerer Deckscheibe und Eintrittskante und/oder ein Kontaktpunkt zwischen innerer Deckscheibe und Austrittskante zumindest einer ersten Schaufel einen bezüglich der Drehachse der hydraulischen Maschine größeren Radius aufweist wie die entsprechenden Kontaktpunkte einer unmittelbar benachbarten zweiten Schaufel, wobei die Kontaktpunkte zwischen äußerer Deckscheibe und Ein- und Austrittskante der ersten und zweiten Laufradschaufel im Wesentlichen den selben Radius aufweisen.
Damit gelingt es zum Einen, im Austrittsbereich des Laufrades an der inneren Deckscheibe sehr kleine Radien zu realisieren, ohne Fertigungsprobleme oder Probleme durch eine zu enge Schaufelanordnung zu verursachen. Zum Anderen, wird die Belastung in den Bereichen hoher Schaufellast, also im Kontaktbereich der Schaufel mit der äußeren Deckscheibe nicht, bzw. nur unwesentlich vergrößert, da die Kontaktlängen in diesen Bereichen gegenüber herkömmlichen Laufrädern nicht verändert werden, sodass sich hinsichtlich der Kavitation keine Verschlechterung im Betrieb ergibt.

Hydraulisch und fertigungstechnisch ist es vorteilhaft, wenn die Eintritts- und Austrittskanten einer ersten und zweiten Laufradschaufel des Läufers zumindest abschnittsweise gleich geformt sind, wobei die Kanten vorzugsweise zwischen dem Kontaktpunkt an der äußeren Deckscheibe und einem beliebigen Punkt auf der Eintritts- bzw. Austrittskante gleich geformt sind.

Um die hydraulische Maschine auch in Teillastbereichen reibungslos betreiben zu können, wird das Verhältnis zwischen dem kleinsten Radius eines Kontaktpunktes der Austrittskante mit der inneren Deckscheibe einer Schaufel und dem Radius des Kontaktpunktes der

Austrittskante mit der äußeren Deckscheibe dieser Schaufel kleiner oder gleich 0,4, vorzugsweise kleiner oder gleich 0,2, vorgegeben. Damit erreicht man, dass der Austrittswirbel aus dem Laufrad verringert wird und sich die hydraulischen Maschine auch in Teillastbereichen einwandfrei betreiben lässt.

Die Anzahl der Laufradschaufeln des Laufrades wird vorteilhaft durch zwei oder drei teilbar gewählt, wobei dann jede zweite oder dritte Laufradschaufel unterschiedliche Ein- und/oder Austrittskanten aufweist, wodurch sich zumindest im Bereich kleiner Radien große fertigungstechnische Vorteile ergeben, da dadurch die einzelnen Laufradschaufeln problemlos bearbeitbar sind.

Aus hydraulischen Gründen ist es günstig, den Kontaktpunkt zwischen Austrittskante und innerer Deckscheibe zumindest einer Schaufel in axialer Richtung unterhalb der Mitte der Eintrittskante dieser Schaufel und bezüglich der Drehrichtung des Laufrades die Kontaktpunkte der Ein- und Austrittskante mit der äußeren Deckscheibe zumindest einer Schaufel vor den entsprechenden Kontaktpunkten der Ein- und Austrittskante mit der inneren Deckscheibe dieser Schaufel anzuordnen. Zusätzliche Verbesserungen des hydraulischen Verhaltens der Maschine ergeben sich, wenn bezüglich der Drehachse des Laufrades der radiale Abstand zwischen den Kontaktpunkten der Austrittskante mit der äußeren und inneren Deckscheibe zumindest einer Schaufel größer als der radiale Abstand zwischen den Kontaktpunkten der Eintrittskante mit der äußeren und inneren Deckscheibe dieser Schaufel ist, vorteilhaft größer 10°, vorzugsweise größer 15°. Unter anderem kann damit das Kavitationsverhalten der hydraulischen Maschine noch weiter verbessert werden.

Wenn ein Teil zumindest einer Laufradschaufel am Nabendeckel angeordnet ist und dieser Teil mit dem Nabendeckel abnehmbar ist können sehr kleine Radien der Kontaktpunkte der Austrittskante mit der inneren Deckscheibe realisiert werden, was sich wiederum im Teillastbereich der hydraulischen Maschine sehr vorteilhaft auswirkt.

Die vorliegende Erfindung wird nun anhand der folgenden schematischen, nicht einschränkenden Figuren 1 bis 3 beschrieben, wobei die
Fig. 1 eine Laufradschaufel eines herkömmlichen Laufrades einer hydraulischen Maschine,
Fig. 2 erfindungsgemäße Laufradschaufeln einer hydraulischen Maschine und
Fig. 3 ein Ansicht in axialer Richtung einer erfindungsgemäßen Laufradschaufel zeigt.

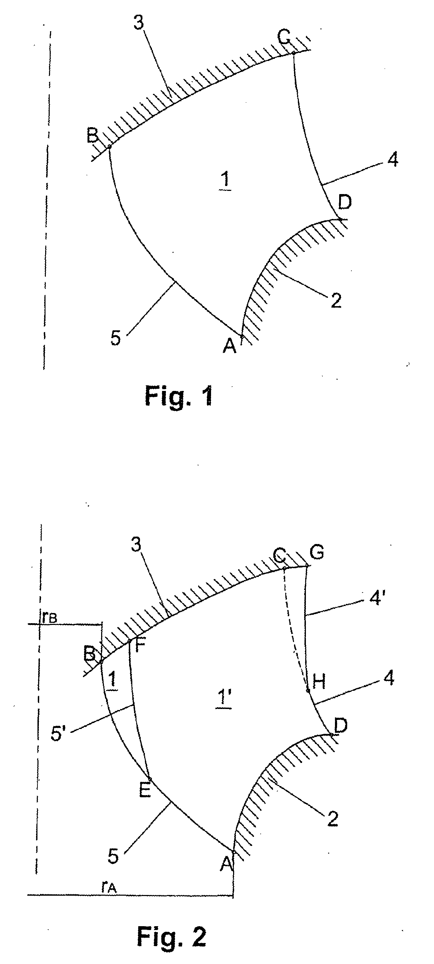

Eine herkömmliche Laufradschaufel 1 einer hydraulischen Maschine nach Fig. 1, wie z.B. einer Turbine, Pump-Turbine oder Radialpumpe, ist zwischen einer inneren 3 und äußeren Deckscheibe 2 angeordnet und weist eine Eintritts- 4 und eine Austrittskante 5 auf, die an den vier Kontaktpunkten A, B, C und D die innere 3 und äußere Deckscheibe 2 schneiden. Benachbarte Laufradschaufeln 1 bilden einen Strömungskanal, der vom Betriebsmedium, beispielsweise Wasser, durchströmbar ist. Für eine Turbine ergäbe sich eine Strömung von der Eintrittskante 4, z.B. von einem hier nicht dargestellten, hinlänglich bekannten Spiralgehäuse und einem Leitapparat, zur Austrittskante 5 und weiter zu einem hier ebenfalls nicht dargestellten, hinlänglich bekannten Saugrohr, welches in ein Unterwasser mündet. Für eine Pumpe oder Pump-Turbine im Pumpbetrieb würde sich die Strömungsrichtung entsprechend umkehren, hier also von Austrittskante 5 zur Eintrittskante 3. Durch die Strömung des Betriebsmediums durch das Laufrad wird die hydraulische Maschine in Rotation gesetzt (bei einer Turbine) bzw. durch die Rotation der hydraulischen Maschine wird Betriebsmedium gefördert (bei einer Pumpe). Die Drehachse der hydraulischen Maschine ist durch die strichpunktierte Linie angedeutet.

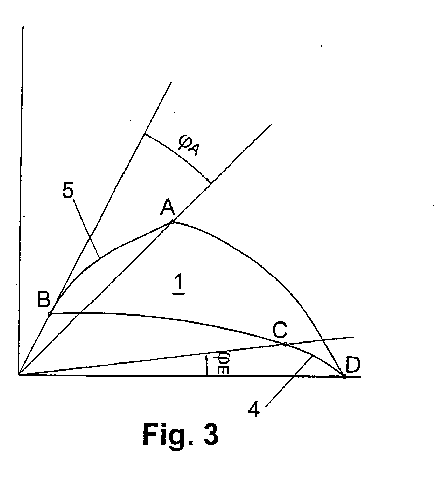

Die Laufradschaufel 1 ist in den meisten Fällen nicht eben, sondern kann grundsätzlich eine beliebige räumliche Krümmung aufweisen, wie in Fig. 3 angedeutet, in der eine Ansicht einer Laufradschaufel 1 in axialer Richtung der Drehachse dargestellt ist. Man erkennt, dass die Kontaktpunkte C (bzw. G), D der Eintrittskante 4 (bzw. 4') an der inneren Deckscheibe 3 und an der äußeren Deckscheibe 2 bezüglich der Drehachse der hydraulischen Maschine einen zirkumferentialen Abstand ϕ_{E} aufweisen können, also bezogen auf die axiale Richtung der Drehachse nicht auf einer radialen Linie durch die Drehachse zu liegen kommen, sondern in einem bestimmten Winkel zueinander angeordnet sind. Das Gleiche kann natürlich auch für die Kontaktpunkte B (bzw. F), A der Austrittskante 5 (bzw. 5') an der inneren 3 und äußeren Deckscheibe 2 gelten, wo ein zirkumferentialer Abstand ϕ_{A} vorgesehen werden kann. Für das Kavitationsverhalten der hydraulischen Maschine ist dabei günstig, wenn dieser zirkumferentiale Abstand ϕ_{A} der Kontaktpunkte B (bzw. F), A der Austrittskante 5 (bzw. 5') größer wie der radiale Abstand ϕ_{E} der Kontaktpunkte C (bzw. G), D der Eintrittskante 4 (bzw. 4') gewählt wird. Ein bevorzugter Wert für ϕ_{A} ist dabei 15° oder größer.
Außerdem erkennt man in Fig. 3, dass die Kontaktpunkte D, A an der äußeren Deckscheibe 2 in Drehrichtung, die durch den Pfeil angedeutet ist, gesehen vor den entsprechenden Kontaktpunkten B (bzw. F), C (bzw. G) an der inneren Deckscheibe angeordnet sind.

In Fig. 2 ist nun schematisch ein erfindungsgemäßes Laufrad dargestellt. Die Laufradschaufeln 1 dieses Laufrades sind dabei wieder zwischen einer inneren 3 und äußeren Deckscheibe 2 angeordnet und bilden wieder einen Strömungskanal für das Betriebsmedium.

Bei diesem Laufrad sind nun jedoch die Eintrittskante 4 und die Austrittskante 5 jeder zweiten oder dritten Laufradschaufel 1 bezogen auf die Drehachse der hydraulischen Maschine teilweise nach außen gezogen (bzw. nach innen gezogen, je nach Sichtweise). D.h., dass nach wie vor ein Teil der Laufradschaufeln 1 herkömmlich, wie in Fig. 1 beschrieben, begrenzt werden, also von einer Eintrittskante 4 zwischen den Kontaktpunkten C und D, einer Austrittskante 5 zwischen den Kontaktpunkten A und B, sowie der inneren 3 und äußeren Deckscheibe 2. Jede zweite oder dritte Laufradschaufel 1' weicht von dieser Begrenzung ab. Die Eintrittskante 4 zweier benachbarter Laufradschaufeln 1, 1' verläuft ausgehend vom Kontaktpunkt D zwischen Eintrittskante 4 und äußerer Deckscheibe bis zu einem beliebigen Punkt H auf der Eintrittskante 4 gleich, ab diesem Punkt H ist die Eintrittskante 4' bezüglich der Drehachse nach außen gezogen, d.h. dass der Kontaktpunkt G der Eintrittskante 4' der Laufradschaufel 1' an der inneren Deckscheiben 3 einen größeren Radius aufweist, wie der entsprechende Kontaktpunkt C der benachbarten Laufradschaufel 1.
An der Austrittskante 5 gilt das oben gesagte analog. Die Austrittskanten 5 der unmittelbar benachbarten Laufradschaufeln 1, 1' decken sich im Wesentlichen zwischen einem Kontaktpunkt A an der äußeren Deckscheibe 2 und einem beliebigen Punkt E auf der Austrittskante 5. Ausgehend von diesem Punkt E ist die Austrittskante 5' jeder zweiten oder dritten Laufradschaufel 1' nach außen gezogen (bzw. nach innen gezogen, je nach Sichtweise), d.h. dass der Kontaktpunkt F der Austrittskante 5' der Laufradschaufel 1' an der inneren Deckscheibe 3 einen größeren Radius aufweist, wie der entsprechende Kontaktpunkt B der benachbarten Laufradschaufel 1.
Die Begrenzung eines Teiles der Laufradschaufeln 1 verläuft somit zwischen den Kontaktpunkten C und D, die die Eintrittskante 4 bilden, sowie den Kontaktpunkten A und B, die die Austrittskante 5 bilden, wie bei herkömmlichen Schaufeln, und die Begrenzung jeder zweiten oder dritten Laufradschaufel 1' verläuft zwischen den Punkten D, H und G, die die Eintrittskante 4' bilden und den Punkten A, E und F, die die Austrittskante 5' bilden.

Die obige Beschreibung ist selbstverständlich lediglich beispielhaft. Es wäre natürlich auch denkbar, nur die Eintrittskante 4 oder nur die Austrittskante 5 oder Ein- 4 und Austrittskante 5 abwechselnd abschnittsweise nach außen zu ziehen.
Die Punkte E und H können darüber hinaus an einer beliebigen Position auf der Austritts- 5 bzw. Eintrittskante 4 angeordnet sein, insbesondere könnten diese Punkte E und H in einer erfindungsgemäßen Ausführung auch mit den Kontaktpunkten A und D an der äußeren Deckscheibe 2 zusammenfallen.

Durch diese abwechselnd unterschiedlich verlaufenden Austrittskanten 5, 5' können die Laufradschaufeln 1 sehr nahe an die Drehachse der hydraulischen Maschine herangebracht werden, d.h. dass die Kontaktpunkte B der Austrittskanten 5 an der inneren Deckscheibe 3 sehr kleine Durchmesser aufweisen können. Insbesondere lässt sich ein Radiusverhältnis r_{B}/r_{A} an der Austrittskante 5 von kleiner oder gleich 0.2 erzielen, was bisher problematisch, wenn überhaupt möglich, war.

Wird die Austrittskante 5 im Bereich der inneren Deckscheibe 3 sehr nahe an die Drehachse herangeführt, kann es unter Umständen zu Platz- und/oder Montageproblemen mit der Befestigung des Laufrades an der Welle kommen. Um dieses Problem zu lösen, könnte man z.B. vorsehen, einen Teil der Laufradschaufeln 1 bzw. 1' als Teil eines hier nicht dargestellten, hinlänglich bekannten Nabendeckels auszuführen. Beispielsweise könnte man einen Abschnitt der durch die Punkte E, B und F festgelegt wird, als Teil des Nabendeckels fertigen, der dann mit dem Nabendeckel vom Laufrad lösbar wäre.

## Patentansprüche

1. Laufrad einer hydraulischen Maschine, vorzugsweise eine Francis-Turbine, Francis-Pumpturbine oder Radial- bzw. Diagonalpumpe, mit einer Anzahl von Laufradschaufeln (1) die zwischen einer inneren (3) und äußeren Deckscheibe (2) angeordnet sind, wobei die Laufradschaufeln (1) eine Eintrittskante (4) und eine Austrittskante (5) aufweisen, wobei ein Kontaktpunkt (G) zwischen innerer Deckscheibe (3) und Eintrittskante (4') und/oder ein Kontaktpunkt (F) zwischen innerer Deckscheibe (3) und Austrittskante (5') zumindest einer ersten Laufradschaufel (1') einen bezüglich der Drehachse der hydraulischen Maschine größeren Radius aufweist als die entsprechenden Kontaktpunkte (B, C) einer unmittelbar benachbarten zweiten Laufradschaufel (1), wobei die Kontaktpunkte (A, D) zwischen äußerer Deckscheibe (2) und Ein- und Austrittskante (4, 4', 5, 5') der ersten und zweiten Laufradschaufel (1, 1') im Wesentlichen den selben Radius aufweisen.

2. Laufrad nach Anspruch 1, **dadurch gekennzeichnet, dass** die Eintrittskanten (4, 4') der ersten und zweiten Laufradschaufel (1, 1') des Laufrades zumindest abschnittsweise unterschiedlich verlaufend geformt sind.

3. Laufrad nach Anspruch 2, **dadurch gekennzeichnet, dass** die Eintrittskanten (4,4') der ersten und zweiten Laufradschaufel (1, 1') des Laufrades zwischen dem Kontaktpunkt (D) der Eintrittskanten (4, 4') an der äußeren Deckscheibe (2) und einem vorbestimmbaren Punkt (H) auf der Eintrittskante (4, 4') im Wesentlichen gleich verlaufend geformt sind.

4. Laufrad nach einem der Ansprüche 1 bis 3, **dadurch gekennzeichnet, dass** die Austrittskanten (5, 5') der ersten und zweiten Laufradschaufel (1, 1') des Laufrades zumindest abschnittsweise unterschiedlich verlaufend geformt sind.

5. Laufrad nach Anspruch 4, **dadurch gekennzeichnet, dass** die Austrittskanten (5, 5') der ersten und zweiten Laufradschaufel (1, 1') des Laufrades zwischen dem Kontaktpunkt (A) der Austrittskanten (5, 5') an der äußeren Deckscheibe (2) und einem vorbestimmbaren Punkt (E) auf der Austrittskante (5, 5') im Wesentlichen gleich verlaufend geformt sind.

6. Laufrad nach einem der Ansprüche 1 bis 5, **dadurch gekennzeichnet, dass** das Verhältnis zwischen dem kleinsten Radius r_{B} eines Kontaktpunktes (B) der Austrittskante (5') mit der inneren Deckscheibe (3) einer Laufradschaufel (1) und dem Radius r_{A} des Kontaktpunktes (A) der Austrittskante (5, 5') mit der äußeren Deckscheibe (2) dieser Laufradschaufel (1) kleiner oder gleich 0,4, vorzugsweise kleiner oder gleich 0,2, ist.

7. Laufrad nach einem der Ansprüche 1 bis 6, **dadurch gekennzeichnet, dass** die Anzahl der Laufradschaufeln (1, 1') des Laufrades durch zwei oder drei teilbar ist.

8. Laufrad nach Anspruch 7, **dadurch gekennzeichnet, dass** bei einer durch zwei teilbaren Anzahl von Laufradschaufein (1, 1') die Austrittskante (5) und/oder die Eintrittskante (4) jeder zweiten Laufradschaufel (1) einen Kontaktpunkt (B, C) an der inneren Deckscheibe (3) mit einem bezüglich der Drehachse des Laufrades kleineren Radius als die entsprechenden Kontaktpunkte (F, G) der benachbarten Laufradschaufeln (1') aufweist.

9. Laufrad nach Anspruch 7, **dadurch gekennzeichnet, dass** bei einer durch drei teilbaren Anzahl von Laufradschaufeln (1, 1') die Austrittskante (5) und/oder die Eintrittskante (4) eines Drittels der Laufradschaufeln (1, 1') einen Kontaktpunkt (B, C) an der inneren Deckscheibe (3) mit einem bezüglich der Drehachse des Laufrades kleineren Radius als die entsprechenden Kontaktpunkte (F, G) der benachbarten Laufradschaufeln (1') aufweisen.

10. Laufrad nach einem der Ansprüche 1 bis 9, **dadurch gekennzeichnet, dass** ein Kontaktpunkt (B, F) zwischen Austrittskante (5, 5') und innerer Deckscheibe (3) zumindest einer Laufradschaufel (1, 1') in axialer Richtung unterhalb der Mitte der Eintrittskante (4, 4') dieser Laufradschaufel (1, 1') angeordnet ist.

11. Laufrad nach einem der Ansprüche 1 bis 10, **dadurch gekennzeichnet, dass** bezüglich der Drehrichtung des Laufrades die Kontaktpunkte (A, D) der Ein- und Austrittskante (4, 4', 5, 5') an der äußeren Deckscheibe (2) zumindest einer Laufradschaufel (1,1') vor den entsprechenden Kontaktpunkten (B, C, F, G) der Ein- und Austrittskante (4, 4', 5, 5') an der inneren Deckscheibe (3) dieser Laufradschaufel (1, 1') angeordnet sind.

12. Laufrad nach einem der Ansprüche 1 bis 11, **dadurch gekennzeichnet, dass** bezüglich der Drehachse des Laufrades der zirkumferentiale Abstand Φ_{A} zwischen den Kontaktpunkten (A, B, F) der Austrittskante (5, 5') an der äußeren (2) und inneren Deckscheibe (3) zumindest einer Laufradschaufel (1, 1') größer als der zirkumferentiale Abstand Φ_{E} zwischen den Kontaktpunkten (D, C, G) der Eintrittskante (4, 4') an der äußeren (2) und inneren Deckscheibe (3) dieser Laufradschaufel (1, 1') ist.

13. Laufrad nach Anspruch 12, **dadurch gekennzeichnet, dass** der zirkumferentiale Abstand Φ_{A} zwischen den Kontaktpunkten (A, B, F) der Austrittskante (5, 5') an der äußeren (2) und inneren Deckscheibe (3) zumindest einer Laufradschaufel größer 10°, vorzugsweise größer 15°, ist.

14. Laufrad nach einem der Ansprüche 1 bis 13, **dadurch gekennzeichnet, dass** zumindest eine Laufradschaufel (1, 1') geteilt ausgeführt ist, wobei zumindest zwei Laufradschaufelteile voneinander lösbar angeordnet sind.

15. Laufrad nach Anspruch 14, **dadurch gekennzeichnet, dass** ein Teil zumindest einer Laufradschaufel (1, 1') am Nabendeckel angeordnet ist und dieser Teil mit dem Nabendeckel von Laufrad lösbar ist.

16. Verfahren zur Herstellung eines Laufrades einer hydraulischen Maschine, vorzugsweise eine Francis-Turbine, Francis-Pumpturbine oder Radial- bzw. Diagonalpumpe, mit einer Anzahl von zwischen einer inneren (3) und äußeren Deckscheibe (2) angeordneten Laufradschaufeln (1, 1'), wobei zumindest eine Laufradschaufel (1') des Laufrades mit einer von einer benachbarten Laufradschaufel (1) unterschiedlichen Eintritts- (4) und/oder Austrittskante (5) gefertigt wird, sodass ein Kontaktpunkt (G) zwischen innerer Deckscheibe (3) und Eintrittskante (4') und/oder ein Kontaktpunkt (F) zwischen innerer Deckscheibe (3) und Austrittskante (5') zumindest einer Laufradschaufel (1') einen bezüglich der Drehachse der hydraulischen Maschine größeren Radius aufweist als die entsprechenden Kontaktpunkte (B, C) einer benachbarten Laufradschaufel (1), wobei die Kontaktpunkte (A, D) zwischen äußerer Deckscheibe (2) und Ein- und Austrittskante (4, 4', 5, 5') aller Laufradschaufeln (1, 1') im Wesentlichen den selben Radius aufweisen.

17. Verfahren nach Anspruch 16, **dadurch gekennzeichnet, dass** die Laufradschaufeln (1, 1') vorab als Einzelteile gefertigt werden und im Anschluss daran mit der inneren (3) und äußeren Deckscheibe (2) zu einem Laufrad verschweißt werden.

18. Verfahren nach Anspruch 16, **dadurch gekennzeichnet, dass** das Laufrad zumindest teilweise gegossen wird und gegebenenfalls die Laufradschaufeln (1, 1') im Anschluss daran mit einem Oberflächenbearbeitungsverfahren, wie, z.B. Schleifen oder Polieren, bearbeitet werden.

## Claims

1. Runner of a hydraulic machine, preferably a Francis turbine, Francis pump turbine or radial or diagonal pump, with a number of runner blades (1) which are arranged between an inner (3) and an outer (2) cover disk, the runner blades (1) having an inlet edge (4) and an outlet edge (5), wherein a contact point (G) between the inner cover disk (3) and the inlet edge (4') and/or a contact point (F) between the inner cover disk (3) and the outlet edge (5') of at least one first runner blade (1') has a radius which is larger with respect to the axis of rotation of the hydraulic machine than the corresponding contact points (B, C) of a directly adjacent, second runner blade (1), with the contact points (A, D) between the outer cover disk (2) and the inlet and outlet edges (4, 4', 5, 5') of the first and the second runner blades (1, 1') having essentially the same radius.

2. Runner according to Claim 1, **characterized in that** the inlet edges (4, 4') of the first and the second runner blades (1, 1') of the runner are shaped to run at least sectionally differently.

3. Runner according to Claim 2, **characterized in that** the inlet edges (4, 4') of the first and the second runner blades (1, 1') of the runner are shaped to run essentially identically between the contact point (D) of the inlet edges (4, 4') on the outer cover disk (2) and a predefinable point (H) on the inlet edge (4, 4').

4. Runner according to one of Claims 1 to 3, **characterized in that** the outlet edges (5, 5') of the first and the second runner blades (1, 1') are shaped to run at least sectionally differently.

5. Runner according to Claim 4, **characterized in that** the outlet edges (5, 5') of the first and the second runner blades (1, 1') of the runner are shaped to run essentially identically between the contact point (A) of the outlet edges (5, 5') on the outer cover disk (2) and a predefinable point (E) of the outlet edge (5, 5').

6. Runner according to one of Claims 1 to 5, **characterized in that** the ratio of the smallest radius r_{B} of a contact point (B) of the outlet edge (5') with the inner cover disk (3) of a runner blade (1) and the radius r_{A} of the contact point (A) of the outlet edge (5, 5') with the outer cover disk (2) of this runner blade (1) is smaller than or equal to 0.4, preferably smaller than or equal to 0.2.

7. Runner according to one of Claims 1 to 6, **characterized in that** the number of runner blades (1, 1') of the runner can be divided by two or by three.

8. Runner according to Claim 7, **characterized in that** - if the number of runner blades (1, 1') can be divided by two - the outlet edge (5) and/or the inlet edge (4) of every second runner blade (1) has a contact point (B, C) on the inner cover disk (3) with a smaller radius with respect to the axis of rotation of the runner than the corresponding contact points (F, G) of the adjacent runner blades (1').

9. Runner according to Claim 7, **characterized in that** - if the number of runner blades (1, 1') can be divided by three - the outlet edge (5) and/or the inlet edge (4) of one third of the runner blades (1, 1') have a contact point (B, C) on the inner cover disk (3) with a smaller radius with respect to the axis of rotation of the runner than the corresponding contact points (F, G) of the adjacent runner blades (1').

10. Runner according to one of Claims 1 to 9, **characterized in that** a contact point (B, F) between the outlet edge (5, 5') and the inner cover disk (3) of at least one runner blade (1, 1') is arranged below the center of the inlet edge (4, 4') of this runner blade (1, 1') in the axial direction.

11. Runner according to one of Claims 1 to 10, **characterized in that**, with respect to the direction of rotation of the runner, the contact points (A, D) of the inlet and the outlet edges (4, 4', 5, 5') on the outer cover disk (2) of at least one runner blade (1, 1') are arranged before the corresponding contact points (B, C, F, G) of the inlet and the outlet edges ((4, 4', 5, 5') on the inner cover disk (3) of this runner blade (1, 1').

12. Runner according to one of Claims 1 to 11, **characterized in that**, with respect to the axis of rotation of the runner, the circumferential spacing Φ_{A} between the contact points (A, B, F) of the outlet edge (5, 5') on the outer (2) and the inner (3) cover disks of at least one runner blade (1, 1') is greater than the circumferential spacing Φ_{E} between the contact points (D, C, G) of the inlet edge (4, 4") on the outer (2) and inner (3) cover disks of this runner blade (1, 1').

13. Runner according to Claim 12, **characterized in that** the circumferential spacing Φ_{A} between the contact points (A, B, F) of the outlet edge (5, 5') on the outer (2) and the inner (3) cover disks of at least one runner blade is greater than 10°, preferably greater than 15°.

14. Runner according to one of Claims 1 to 13, **characterized in that** at least one runner blade (1, 1') has a split design, at least two runner blade parts being arranged detachably from each other.

15. Runner according to Claim 14, **characterized in that** a part of at least one runner blade (1, 1') is arranged on the hub cover, and this part is detachable from the runner together with the hub cover.

16. Process for producing a runner of a hydraulic machine, preferably a Francis turbine, Francis pump turbine or radial or diagonal pump, with a number of runner blades (1, 1') arranged between an inner (3) and an outer (2) cover disk, at least one runner blade (1') of the runner being manufactured with an inlet (4) and/or an outlet edge (5) different from an adjacent runner blade (1), so that a contact point (G) between the inner cover disk (3) and the inlet edge (4') and/or a contact point (F) between the inner cover disk (3) and the outlet edge (5') of at least one runner blade (1') has a radius which is larger with respect to the axis of rotation of the hydraulic machine than the corresponding contact points (B, C) of an adjacent runner blade (1), the contact points (A, D) between the outer cover disk (2) and the inlet and outlet edges (4, 4', 5, 5') of all runner blades (1, 1') having essentially the same radius.

17. Process according to Claim 16, **characterized in that** the runner blades (1, 1') are pre-fabricated individually and are thereafter welded to the inner (3) and outer (2) cover disks to form a runner.

18. Process according to Claim 16, **characterized in that** the runner is at least partially casted, and the runner blades (1, 1') may thereafter be machined by means of a finishing method such as, for instance, grinding or polishing.

## Revendications

1. Roue motrice d'une machine hydraulique, de préférence d'une turbine Francis, d'une pompe-turbine Francis, ou d'une pompe radiale ou diagonale, avec une quantité d'ailettes (1) disposées entre un disque de recouvrement intérieur (3) et extérieur (2), les ailettes (1) ayant une arête d'entrée (4) et une arête de sortie (5), où un point de contact (G) entre le disque de recouvrement intérieur (3) et l'arête d'entrée (4') et/ou un point de contact (F) entre le disque de recouvrement intérieur (3) et l'arête de sortie (5') d'au moins une première ailette (1') a un rayon plus grand relativement à l'axe de rotation de la machine hydraulique que les points de contact correspondants (B, C) d'une deuxième ailette (1) immédiatement adjacente, les points de contact (A, D) entre le disque de recouvrement extérieur (2) et les arêtes d'entrée et de sortie (4, 4', 5, 5') de la première et de la deuxième ailette (1, 1') ayant essentiellement le même rayon.

2. Roue motrice selon la revendication 1, **caractérisé en ce que** les arêtes d'entrée (4, 4') de la première et de la deuxième ailette (1, 1') de la roue motrice ont une forme évoluant au moins sectionalement différemment.

3. Roue motrice selon la revendication 2, **caractérisé en ce que** les arêtes d'entrée (4, 4') de la première et de la deuxième ailette (1, 1') de la roue motrice ont une forme évoluant essentiellement identiquement entre le point de contact (D) des arêtes d'entrée (4, 4') sur le disque de recouvrement extérieur (2) et un point (H) prédéterminable sur l'arête d'entrée (4, 4').

4. Roue motrice selon l'une des revendications 1 à 3, **caractérisé en ce que** les arêtes de sortie (5, 5') de la première et de la deuxième ailette (1, 1') de la roue motrice ont une forme évoluant au moins sectionalement différemment.

5. Roue motrice selon la revendication 4, **caractérisé en ce que** les arêtes de sortie (5, 5') de la première et de la deuxième ailette (1, 1') de la roue ont une forme évoluant essentiellement identiquement entre le point de contact (A) des arêtes de sortie (5, 5') sur le disque de recouvrement extérieur (2) et un point (E) prédéterminable sur l'arête de sortie (5, 5').

6. Roue motrice selon l'une des revendications 1 à 5, **caractérisé en ce que** le rapport entre le rayon le plus petit r_{B} d'un point de contact (B) de l'arête de sortie (5') avec le disque de recouvrement intérieur (3) d'une ailette (1) et le rayon r_{A} du point de contact (A) de l'arête de sortie (5, 5') avec le disque de recouvrement extérieur (2) de cette ailette (1) est inférieur ou égal à 0.4, de préférence inférieur ou égal à 0.2.

7. Roue motrice selon l'une des revendications 1 à 6, **caractérisé en ce que** le nombre d'ailettes (1, 1') de la roue motrice est divisible par deux ou trois.

8. Roue motrice selon la revendication 7, **caractérisé en ce que** - si le nombre d'ailettes (1, 1') est divisible par deux - l'arête de sortie (5), et/ou l'arête d'entrée (4) de chaque ailette (1) sur deux, a un point de contact (B, C) sur le disque de recouvrement intérieur (3) ayant un rayon relatif à l'axe de rotation de la roue motrice inférieur aux points de contact (F, G) correspondants des ailettes (1') adjacentes.

9. Roue motrice selon la revendication 7, **caractérisé en ce que** - si le nombre d'ailettes (1, 1') est divisible par trois - l'arête de sortie (5), et/or l'arête d'entrée (4) d'un tiers des ailettes (1, 1'), a un point de contact (B, C) sur le disque de recouvrement intérieur (3) ayant un rayon relatif à l'axe de rotation de la roue motrice inférieur aux points de contact (F, G) correspondants des ailettes (1') adjacentes.

10. Roue motrice selon l'une des revendications 1 à 9, **caractérisé en ce qu'**un point de contact (B, F) entre l'arête de sortie (5, 5') et le disque de recouvrement intérieur (3) d'au moins une ailette (1, 1') est disposée au-dessous du centre de l'arête d'entrée (4, 4') de cette ailette (1, 1') en direction axiale.

11. Roue motrice selon l'une des revendications 1 à 10, **caractérisé en ce que,** relativement à la direction de rotation de la roue motrice, les points de contact (A, D) de l'arête d'entrée et de l'arête de sortie (4, 4', 5, 5') du disque de recouvrement extérieur (2) d'au moins une ailette (1, 1') est disposée avant les points de contact correspondants (B, C, F, G) des arêtes d'entrée et de sortie (4, 4', 5, 5') du disque de recouvrement intérieur (3) de cette ailette (1, 1 ').

12. Roue motrice selon l'une des revendications 1 à 11, **caractérisé en ce que**, relativement à l'axe de rotation de la roue motrice, l'écart circonférentiel Φ_{A} entre les points de contact (A, B, F) de l'arête de sortie (5, 5') du disque de recouvrement extérieur (2) et intérieur (3) d'au moins une ailette (1, 1') est supérieur à l'écart circonférentiel Φ_{E} entre les points de contact (D, C, G) de l'arête d'entrée (4, 4") du disque de recouvrement extérieur (2) et intérieur (3) de cette ailette (1, 1').

13. Roue motrice selon la revendication 12, **caractérisé en ce que** l'écart circonférentiel Φ_{A} entre les points de contact (A, B, F) de l'arête de sortie (5, 5') sur le disque de recouvrement extérieur (2) et intérieur (3) d'au moins une ailette est supérieur à 10°, de préférence 15°.

14. Roue motrice selon l'une des revendications 1 à 13, **caractérisé en ce qu'**au moins une ailette (1, 1') est divisée, avec au moins deux parties d'ailettes montées détachables l'une de l'autre.

15. Roue motrice selon la revendication 14, **caractérisé en ce qu'**une partie d'au moins une ailette (1, 1') est disposée sur le couvre-moyeu et que cette partie est détachable de la roue motrice ensemble avec le couvre-moyeu.

16. Procédé de fabrication d'une roue motrice d'une machine hydraulique, de préférence d'une turbine Francis, d'une pompe-turbine Francis, ou d'une pompe radiale ou diagonale, avec une quantité d'ailettes (1, 1') disposées entre un disque de recouvrement intérieur (3) et extérieur (2), au moins une ailette (1') de la roue motrice ayant fabriquée avec une arête d'entrée (4) et une arête de sortie (5) de façon différente d'une arête adjacente, pour qu'un point de contact (G) entre le disque de recouvrement intérieur (3) et l'arête d'entrée (4') et/ou un point de contact (F) entre le disque de recouvrement intérieur (3) et l'arête de sortie (5') d'au moins une ailette (1') a un rayon plus grand relativement à l'axe de rotation de la machine hydraulique que les points de contact correspondants (B, C) d'une ailette (1) adjacente, les points de contact (A, D) entre le disque de recouvrement extérieur (2) et les arêtes d'entrée et de sortie (4, 4', 5, 5') de toutes les ailettes (1, 1') ayant essentiellement le même rayon.

17. Procédé selon la revendication 16, **caractérisé en ce que** les ailettes (1, 1') sont pré-fabriquées individuellement et sont par la suite soudées au disque de recouvrement intérieur (3) et extérieur (2) pour obtenir une roue motrice.

18. Procédé selon la revendication 16, **caractérisé en ce que** la roue motrice est au moins en partie, est fondu, et les ailettes (1, 1') peuvent, dans la suite, être usinées par des méthodes de finissage, par exemple, de meulage et de polissage.
